# EUROPÄISCHE PATENTSCHRIFT

(11) **EP 1 186 972 B1**
(45) Veröffentlichungstag und Bekanntmachung des Hinweises auf die Patenterteilung: **27.02.2008**
(21) Anmeldenummer: 01121320.4
(22) Anmeldetag: 06.09.2001
(51) Int. Cl.: G05B 19/042

(54) **Verfahren zur Initialisierung einer Erweiterungsbaugruppe an ein programmierbares elektrisches Schaltgerät**
Method of initilisation of an extension board in a programmable electrical switching device
Méthodé d' initialisation une unité d'extension à un appareil de commande électrique programmable

(30) Priorität: 06.09.2000 DE 10043841
(43) Veröffentlichungstag der Anmeldung: 13.03.2002
(73) Patentinhaber: Moeller GmbH, 53115 Bonn (DE)
(72) Erfinder: Dung, Olaf, 53773 Hennef (DE); Bauerfeind, Dieter, 53177 Bonn (DE)

(56) Entgegenhaltungen:
- EP-A- 0 434 986
- DE-A1- 19 812 423

## Beschreibung

Die Erfindung betrifft ein Verfahren zum Anschluss einer Erweiterungsbaugruppe an ein programmierbares elektrisches Schaltgerät.

Schaltgeräte der eingangs genannten Art können zum Beispiel Kleinsteuerungen, Steuerrelais oder dergleichen sein. Allen Schaltgeräten gemein ist, dass diese eine Recheneinheit, z.B. in Form eines Mikroprozessors, eine integrierte Anzeigeeinheit sowie eine integrierte Bedieneinheit aufweisen.

Aus dem Hauptkatalog der Firma Klöckner-Moeller GmbH - "Automatisieren und Energie verteilen '99" (Seite 05/006-05/007) - ist bereits ein gattungsgemäßes programmierbares Steuerrelais mit integrierter Rechen-, Bedien-, und Anzeigeeinheit bekannt. Diese Geräte finden ihre Anwendung bei kleineren Steuerungsaufgaben im Bereich der Haustechnik sowie im Schaltschrank-, Maschinen- und Apparatebau. Anstelle herkömmlicher Verdrahtungstechnik einzelner Komponenten wie Hilfsschütze, Relais oder Zählerbausteinen werden die gewünschten Funktionen programmtechnisch in dem Steuerrelais "verdrahtet" (programmiert). Die Programmierung erfolgt hier vorzugsweise in Schaltplandarstellung.

Ferner sind speicherprogrammierbare Steuerungen (z.B. Kompaktsteuerungen) bekannt, die in ihrer Funktionalität über sogenannte Erweiterungsmodule erweitert werden können (Hauptkatalog der Fa. Klöckner-Moeller GmbH; "Automatisieren und Energie verteilen '99" (Seite 01/004-01/005).

Schaltgeräte, wie die vorstehend beschriebenen, sind in ihrer Erweiterungsfähigkeit derzeit stark eingeschränkt. Soll ein Basisgerät mit einer Erweiterungsbaugruppe erweitert werden, muß diese im aktuellen Betriebssystem des Basisgerätes in einer Art "Tabelle mit anschließbaren Erweiterungsbaugruppen" vorhanden sein. Das dem Basisgerät bereits bekannte Gerät wird dann ausgewählt und so in die Funktionalität des Basisgerätes eingefügt. Um diese programmierbaren Schaltgeräte wie programmierbare Steuerungen Logikrelais und dergleichen für zukünftige Erweiterungsmodule kompatibel zu machen, muß die Anwendungssoftware und das jeweilige Betriebssystem mit der oben genannten Tabelle zum jeweiligen Zeitpunkt aktualisiert werden. Hierfür müssen neue Hardware- und Softwaretreiber entwickelt werden. Erst wenn die Steuerung aktualisiert worden ist, können neue Erweiterungsmodule verwendet werden.

Ein weiteres Automatisierungssystem ist in der EP 0 434 986 A2 beschrieben worden. Systeme dieses Typs haben den Nachteil der mangelnden Flexibilität bezüglich einer Erweiterung, da alle Erweiterungsmodule bereits vorab abgespeichert werden müssen oder zu einem späteren Zeitpunkt nachgeladen werden müssen.

Der Erfindung liegt die Aufgabe zugrunde, ein Verfahren zu schaffen, das die Kompatibilität eines Basisgerätes für die Erweiterung nicht implementierter Funktionen und Standards gewährleistet.

Ausgehend von einem Kommunikationssystem (Basisgerät mit anschließbarer "bekannter" Erweiterungsbaugruppe) der eingangs genannten Art wird die Aufgabe erfindungsgemäß dadurch gelöst, dass das Schaltgerät und die Erweiterungsbaugruppe derart ausgebildet sind, dass in einem Erweiterungs-Kommunikationsmodusnach Anschluss der Erweiterungsbaugruppe an das Schaltgerät ein Erkennungsmodus innerhalb des Schaltgerätes initiiert wird, wobei eine Abfrage erfolgt, ob die angeschlossene Erweiterungsbaugruppe initialisierbar ist oder nicht. Ist die Erweiterungsbaugruppe nicht initialisierbar, erfolgt kein Datenaustausch zwischen Schaltgerät und
Erweiterungsbaugruppe; ist die Erweiterungsbaugruppe initialisierbar, schaltet Erweiterungsbaugruppe initialisierbar, schaltet das Schaltgerät in einen Erweiterungs-Kommunikationsmodus in dem der weitere Datenaustausch für die Initialisierung und gegebenenfalls die Konfiguration Erweiterungsbaugruppe unter Kontrolle des Betriebssystems der Erweiterungsbaugruppe erfolgt. Im Zuge der Initialisierung werden die für den Betrieb der Gerätekombination (Basisgerät mit Erweiterungsbaugruppe) erforderlichen Betriebsdaten wie die Gerätekennung für das Grundgerät sowie das Funktionsprofil in einer entsprechenden Datenstruktur ausgetauscht. Bei der Konfiguration einer konfigurierbaren Erweiterungsbaugruppe werden notwendige Daten wie Teilnehmeradresse, Datenübertragungsgeschwindigkeit und ggf. veränderliche Teile aus dem Funktionsprofil der Erweiterungsbaugruppe ergänzt bzw. aktualisiert,

In einer bevorzugten Ausführung der Erfindung wird das durch den Anschluß einer Erweiterungsbaugruppe automatisch in einen Remote-Modus geschaltet. Alternativ kann der Remote-Modus auch manuell vom Benutzer über einen Menüpunkt "REMOTE ON" in der Benutzeroberfläche angewählt werden. Mit der Auswahl von "REMOTE ON" wird ab diesem Zeitpunkt die Recheneinheit (CPU) des Schaltgerätes von der Recheneinheit der angeschlossenen Erweiterungsbaugruppe gesteuert.

Wird eine initialisierbare Erweiterungsbaugruppe an der dafür vorgesehenen Geräteschnittstelle des Schaltgerätes erkannt, wird eine Initialisierung der Erweiterungsbaugruppe durchgeführt. In einem weiteren Verfahrensschritt wird abgefragt (über das BTS des Schaltgerätes), ob die initialisierbare Erweiterungsbaugruppe auch konfigurierbar ist oder nicht.

Ist die angeschlossene Baugruppe nicht konfigurierbar (z.B eine Baugruppe für die Erweiterung der Ein- und Ausgänge um n x Eingänge und m x Ausgänge), kann der gesamte erforderliche Datenaustausch vollautomatisch durchgeführt werden. Der Datenaustausch wird mit Vorteil gänzlich von der Erweiterungsbaugruppe gesteuert. Hierzu erfolgt zwischen den beiden Geräten unter Kontrolle der Recheneinheit der Erweiterungsbaugruppe ein gesteuerter Datenaustausch. Zumindest werden dem Schaltgerät von der Erweiterungsbaugruppe deren für eine Grundfunktionalität erforderlichen Mindest-Konfigurationsdaten übermittelt.

Ist die angeschlossene Erweiterungsbaugruppe konfigurierbar (z.B. Baugruppe für die Erweiterung der Ein- und/oder Ausgänge um n x Eingänge und/oder m x Ausgänge, wobei Ein- und Ausgänge per Konfiguration umschaltbar bzw. definierbar sind), verhält sich die Recheneinheit des Schaltgerätes als MMI (Mensch-Maschine-Interface) und stellt entsprechende Dienste für Displayausgabe und Tastatureingabe zur Verfügung.

Weitere Einzelheiten und Vorteile der Erfindung ergeben sich aus dem folgenden, anhand von Figuren erläuterten Ausführungsbeispiel. Es zeigen
- Figur 1:: ein Kommunikationssystem zur Durchführung des erfindungsgemäßen Verfahrens, umfassend ein Schaltgerät mit angeschlossener Erweiterungsbaugruppe in schematischer Darstellung; und
- Figur 2:: eine Schaltgerätekombination gemäß Figur 1 in einer bevorzugten Ausführungsform;

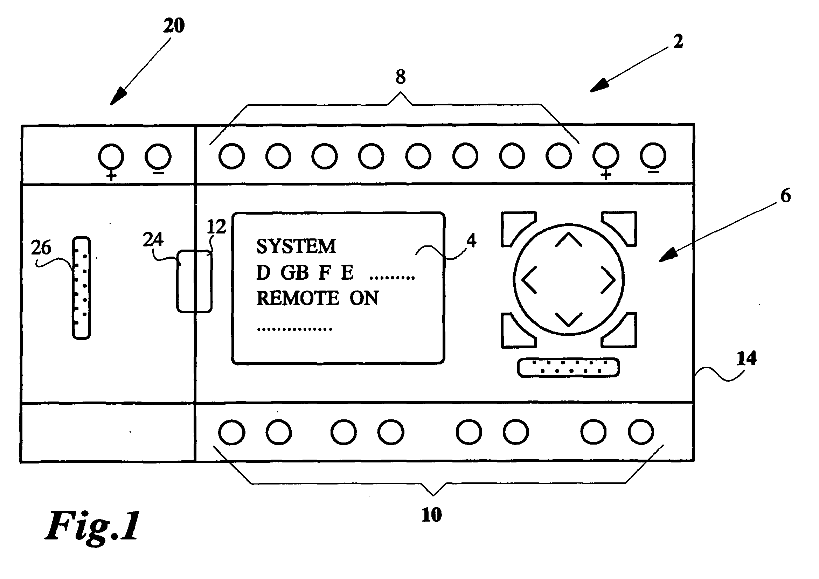

Fig. 1 zeigt den Aufbau eines Kommunikationssystems zur Durchführung des erfindungsgemäßen Verfahrens in einer bevorzugten Ausführungsform.
Das Kommunikationssystem umfasst ein programmierbares elektrisches Schaltgerät 2 mit einer Recheneinheit, einem Bildschirm 4, einer Bedieneinheit 6, mit Signaleingängen 8 und mit Signalausgängen 10 und mit einer Datenschnittstelle 12. Dabei sind die Recheneinheit, der Bildschirm 4, die Bedieneinheit 6, die Signaleingänge 8 und die Signalausgänge 10 sowie die Datenschnittstelle 12 in einem gemeinsamen Gehäuse 14 untergebracht. Die Schaltfunktionen sind dabei durch den Benutzer über eine menügeführte Benutzeroberfläche auf dem Bildschirm 4 programmierbar. Das programmierbare Schaltgerät 2 schaltet dann unter Kontrolle eines vom Benutzer programmierbaren Anwenderprogramms und in Abhängigkeit vom Zustand der Signaleingänge 8 den Stromfluß zwischen den Signaleingängen 8 und den Signalausgängen 10.

Desweiteren umfasst das Kommunikationssystem eine Erweiterungsbaugruppe 20 mit einer in einem gemeinsamen Gehäuse 22 untergebrachten Recheneinheit und mit einer Datenschnittstelle 24. Das Schaltgerät 2 und die Erweiterungsbaugruppe 20 sind über ihre Datenschnittstellen 12, 24 miteinander mechanisch und elektrisch verbunden. Erfindungsgemäß sind das Schaltgerät 2 und die Erweiterungsbaugruppe 20 derart ausgebildet, dass nach Anschluss der Erweiterungsbaugruppe 20 an das Schaltgerät 2 ein Erkennungsmodus innerhalb des Schaltgerätes 2 initiiert wird, wobei eine Abfrage erfolgt, ob die angeschlossene Erweiterungsbaugruppe 20 initialisierbar ist oder nicht. Ist die Erweiterungsbaugruppe 20 nicht initialisierbar, erfolgt kein Datenaustausch zwischen Schaltgerät 2 und Erweiterungsbaugruppe 20 (Baugruppe wird als "Fremdgerät" ignoriert); ist die Erweiterungsbaugruppe 20 initialisierbar, schaltet das Schaltgerät 2 in einen Erweiterungs-Kommunikationsmodus in dem der weitere Datenaustausch unter der Kontrolle des Betriebssystems der Erweiterungsbaugruppe 20 erfolgt.

In einer bevorzugten Ausführung der Erfindung wird das Schaltgerät 2 bei angeschlossener Erweiterungsbaugruppe 20 in einen Remote-Modus geschaltet. Dieser ist frei vom Benutzer über einen Menüpunkt "REMOTE ON" in der Benutzeroberfläche wählbar. Mit der Auswahl von "REMOTE ON" wird ab diesem Zeitpunkt die Recheneinheit (CPU) des Schaltgerätes 2 von der Recheneinheit der angeschlossenen Erweiterungsbaugruppe 20 gesteuert.

Wird eine initialisierbare Erweiterungsbaugruppe 20 an der dafür vorgesehenen Geräteschnittstelle 12 des Schaltgerätes 2 erkannt, wird in einem weiteren Verfahrensschritt abgefragt (über das BTS des Schaltgerätes), ob die initialisierbare Erweiterungsbaugruppe 20 auch konfigurierbar ist oder nicht.

Ist die angeschlossene Baugruppe 20 nicht konfigurierbar, kann der weitere Datenaustausch (Initialisierung und ggf. Mindest-Konfiguration) vollautomatisch durchgeführt werden. Die hierfür erforderliche Kommunikation wird mit Vorteil gänzlich von der Erweiterungsbaugruppe 20 selbst gesteuert. Hierzu erfolgt zwischen den beiden Geräten 2, 20 unter Kontrolle der Recheneinheit der Erweiterungsbaugruppe 20 ein gesteuerter Datenaustausch.

Ist die angeschlossene Erweiterungsbaugruppe 20 konfigurierbar, verhält sich diese als MMI (Mensch-Maschine-Interface) und stellt entsprechende Dienste Displayausgabe und Tastatureingabe zur Verfügung indem im Erweiterungs-Kommunikationsmodus die Recheneinheit des Schaltgerätes 2 von der Recheneinheit der Erweiterungsbaugruppe 20 gesteuert wird derart, dass die Bedieneinheit 6 und der Bildschirm 4 des Schaltgerätes 2 von diesem funktional entkoppelt und mit der Erweiterungsbaugruppe 20 gekoppelt werden. Um Eingabewerte der Tastatur 6 vom Schaltgerät 2 an die angeschlossene Erweiterungsbaugruppe 20 übergeben zu können, werden Editoren benötigt, die zum Beispiel Werte wie Integerwerte oder Uhrzeitwerte an die Erweiterungsbaugruppe 20 übergeben können. Vorzugsweise werden alle konfigurierbaren Erweiterungsbaugruppen 20 über einen Basis-Dienstevorrat konfiguriert:
- LÖSCHE DISPLAY, bereitet eine Zeichenausgabe vor;
- SETZE CURSOR, positioniert den Cursor im Displayfeld;
- GIB ZEICHEN AUS, schreibt ein ASCII-Zeichen an der momentanen Cursorposition und inkrementiert dieses;
- HOLE INTEGERWERT, wartet auf die Übernahme des im Display eingestellten Wertes (Übernahme z.B. durch Betätigung einer Freigabetaste);
- REMOTE OFF, verlässt den Konfigurationsmodus.

Auf diese Weise ist die Eingabe von Adresse, Baudrate und sonstigen Parametern im Integerbereich realisierbar.

Bei der Inbetriebnahme des Kommunikationssystems werden zur Initialisierung und ggf. Konfiguration der Erweiterungsbaugruppe 20 in einer Speichereinheit (z.B. EEPROM) derselben deren Busadresse beziehungsweise deren Identnummer hinterlegt. Diese müssen in dem Erweiterungs-Kommunikationsmodus von der Recheneinheit der Erweiterungsbaugruppe 20 der Recheneinheit des Schaltgerätes 2 übergeben werden. Hierfür wird eine Remote-Server-Funktionalität in der Recheneinheit des Schaltgerätes 2 implementiert, wodurch entsprechende Dienste für zum Beispiel die Eingabe einer Teilnehmeradresse der angeschlossenen Erweiterungsbaugruppe 20 oder die Eingabe von Parametern für dieselbe über die Bedieneinheit 6 des Schaltgerätes 2 und die Anzeige der eingegebenen Adresse bzw. Parameter auf dem Bildschirm 4 des Schaltgerätes 2 ermöglicht werden.
Für den Anwendungsfall, dass über die Erweiterungsbaugruppe 20 der Anschluß des Schaltgerätes 2 an ein Bussystem wie Profibus realisiert werden soll, weist die Erweiterungsbaugruppe 20 eine entsprechende Schnittstelle 26 sowie Softwaremittel zur Kommunikation und Anbindung an das Bussystem auf. Während des Betriebs des Kommunikationssystems wird dann ein zyklischer Datenaustausch zwischen Profibus und der Recheneinheit der Erweiterungsbaugruppe 20 durchgeführt.

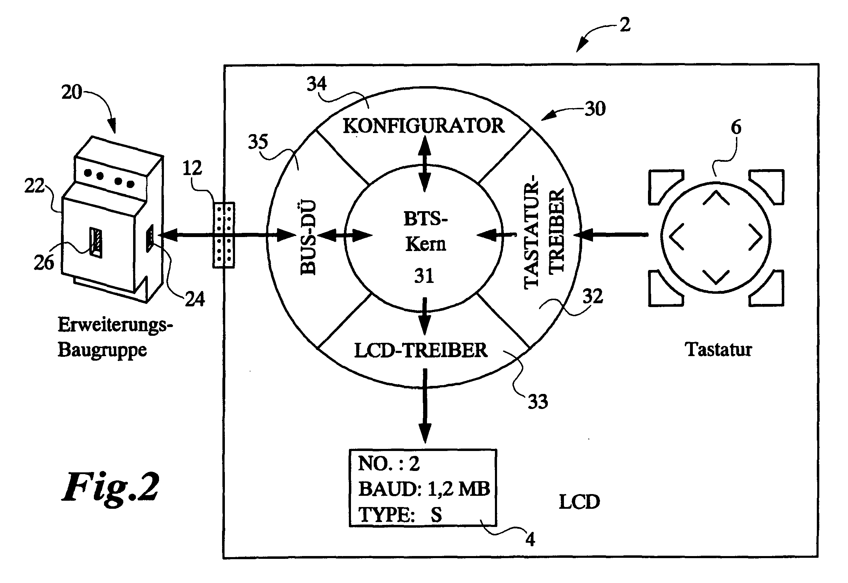

Figur 2 zeigt in schematischer Darstellung die funktionale Anbindung der Erweiterungsbaugruppe 20 an das Schaltgerät 2. Dabei ist das Betriebssystem 30 mit Vorteil dergestalt, daß es einen Betriebssystemkern 31 für die Koordination und Ausführung von Standardfunktionen des Schaltgerätes 2 und einige Treiberteile 32, 33 für die Datenkoordination der Eingabeeinheit 6 und der Anzeigeeinheit 8 aufweist. Gemäß der Erfindung weist das Betriebssystem 30 ferner einen Konfiguratorteil 34 auf. Dieser Konfiguratorteil 34 wirkt derart mit dem Betriebssystemkern 31 zusammen, daß über die Geräteschnittstelle 12 eine Kommunikation mit der angeschlossenen Erweiterungsbaugruppe 20 möglich ist und vorzugsweise, dass mittels der Eingabeeinheit 6 Daten der Erweiterungsbaugruppe 20 veränderbar sind und/oder in diese eingebbar sind und dieser Vorgang über die Anzeigeeinheit 4 anzeigbar ist. Bei dieser Wirkungsweise schleust der Betriebssystemkern 31 des Schaltgerätes 2 - gesteuert über den Konfiguratorteil 34 - die Daten von der Eingabeeinheit 6 des Schaltgerätes 2 zur externen Erweiterungsbaugruppe 20 und von der Erweiterungsbaugruppe 20 zur integrierten Anzeigeeinheit 8 des Schaltgerätes 2 nur durch.

Ist ein Erweiterungsgerät 20 an das Schaltgerät 2 angeschlossen, dann wird, sobald das Schaltgerät 2 eingeschaltet und der Remote-Modus ausgewählt ist, die Erweiterungsbaugruppe 20 vom Betriebsystem 30 des Schaltgerätes 2 erkannt. Ist die Erweiterungsbaugruppe 20 noch nicht vom Schaltgerät 2 initialisiert worden, ist das System gesperrt und kann nicht in den Betriebszustand "RUN" gehen. Auf dem Startmenü des Schaltgerätes 2 erscheint ein Unterpunkt "REMOTE ON". Wird der Unterpunkt "REMOTE ON" gewählt wird vom Betriebssystem 30 ein Initialisierungslauf gestartet (Datenstring wird an Erweiterungsbaugruppe 20 gesendet). Das Betriebssystem 30 des Schaltgerätes 2 (genauer der Konfiguratorteil 10d) erhält daraufhin von der Erweiterungsbaugruppe 20 einen Datenstring für die Anzeigeeinheit 4. Von diesem Zeitpunkt an übernimmt die Erweiterungsbaugruppe 20 über den Konfiguratorteil 34 des Schaltgerätes 2 die Steuerung der Anzeigeeinheit 4 und die Abfrage der Eingabeeinheit 6. Der von der Erweiterungsbaugruppe 20 gesendete Datenstring enthält Benutzer-Klartextinformationen über erforderliche Eingaben und stellt die für die Eingabe benötigten Eingabemasken zur Verfügung. Der Konfiguratorteil 34 des Betriebssystems 30 des Schaltgerätes 2 wirkt also als reine Datendurchreiche der Erweiterungsbaugruppe 20. Datenprüfungen wie Wertebereichsprüfungen und Plausibilitätskontrollen obliegen dabei allein der Erweiterungsbaugruppe 20.

Die gesamte Funktionalität der neuen Erweiterungsbaugruppe 20 und die erforderlichen Initialisierungsinformationen sind erfindungsgemäß in der Erweiterungsbaugruppe 20 vorhanden. Durch diese erfindungsgemäße Ausführung können auch zukünftige Erweiterungsbaugruppen 20 an derartig ausgestaltete Schaltgeräte 2 angekoppelt werden. Somit kann ein heutiges Schaltgerät 2 zu einem späteren Zeitpunkt zum Beispiel an eine zu einem späteren Zeitpunkt entwickelte Busschnittstelle angekoppelt werden.

## Patentansprüche

1. Verfahren zum Initiieren einer an ein programmierbares elektrisches Schaltgerät (2) anschließbaren, und in einem eigenen Gehäuse (22) Recheneinheit und Datenschnittstelle (24) umfassenden Erweiterungsbaugruppe (20),
wobei das Schaltgerät (2) in einem eigenen Gehäuse (14) umfasst:
eine Recheneinheit, einen Bildschirm (4), eine Bedieneinheit (6),
Signaleingänge (8), Signalausgänge (10), eine Datenschnittstelle (12),
wobei Schaltfunktionen durch den Benutzer über eine menügeführte Benutzeroberfläche auf dem Bildschirm (4) programmierbar sind,
wobei das programmierbare Schaltgerät (2) unter Kontrolle eines Anwenderprogramms und in Abhängigkeit vom Zustand der Signaleingänge (8) den Stromfluß zwischen den Signaleingängen (8) und den Signalausgängen (10) schaltet,
**gekennzeichnet**
nach Verbinden des Schaltgeräts (2) mit der Erweiterungsbaugruppe (20) zwecks Datenaustausch über ihre Datenschnittstellen (12, 24)
durch folgenden Verfahrensschritt:
Initiierung eines Erkennungsmodus innerhalb des Schaltgerätes (2), wobei eine Abfrage erfolgt, ob die angeschlossene Erweiterungsbaugruppe (20) initialisierbar ist oder nicht,
• ist die Erweiterungsbaugruppe (20) nicht initialisierbar erfolgt kein Datenaustausch zwischen Schaltgerät (2) und Erweiterungsbaugruppe (20),
• ist die Erweiterungsbaugruppe (20) initialisierbar, schaltet das Schaltgerät (2) in einen Erweiterungs-Kommunikationsmodus in dem der weitere Datenaustausch unter Kontrolle des Betriebssystems der Erweiterungsbaugruppe (20) erfolgt.

2. Verfahren nach vorstehendem Anspruch, **dadurch gekennzeichnet, dass** in einem weiteren Verfahrensschritt abgefragt wird, ob die initialisierbare Erweiterungsbaugruppe (20) konfigurierbar ist oder nicht und für den Fall, dass sie konfigurierbar ist, in dem Erweiterungs-Kommunikationsmodus die Recheneinheit des Schaltgerätes (2) von der Recheneinheit der Erweiterungsbaugruppe (20) gesteuert wird derart, dass die Bedieneinheit (6) und der Bildschirm (4) des Schaltgerätes (2) von diesem funktional entkoppelbar und mit der Erweiterungsbaugruppe (20) koppelbar sind.

## Claims

1. Method for initiating an expansion module (20) which can be connected to a programmable electrical switching device (2) and comprises a processing unit and a data interface (24) in its own housing (22), the switching device (2) comprising, in its own housing (14):
a processing unit, a display screen (4), an operator unit (6), signal inputs (8), signal outputs (10), and a data interface (12),
switching functions being programmable by the user, via a menu-driven user interface on the display screen (4),
the programmable switching device (2) switching the current flow between the signal inputs (8) and the signal outputs (10), under the control of a user program and as a function of the state of the signal inputs (8),
**characterised**,
after connection of the switching device (2) to the expansion module (20) for the purpose of data exchange via their data interfaces (12, 24),
by the following method step:
initiation of a recognition mode in the switching device (2), a query being made as to whether or not the connected expansion module (20) can be initialised,
• if the expansion module (20) cannot be initialised, then there is no exchange of data between the switching device (2) and the expansion module (20), and
• if the expansion module (20) can be initialised, then the switching device (2) switches into an expansion communication mode, in which the further data exchange takes place under the control of the operating system of the expansion module (20).

2. Method according to the preceding claim, **characterised in that** in a further method step, a query is made as to whether or not the initialised expansion module (20) is configurable, and in the case where the expansion module is configurable, the processing unit of the switching device (2) is controlled, in the expansion communication mode, by the processing unit of the expansion module (20), in such a way that the operator unit (6) and the display screen (4) of the switching device (2) can be functionally decoupled from the switching device (2) and coupled to the expansion module (20).

## Revendications

1. Procédé d'initialisation d'un module d'extension (20) pouvant être raccordé à un dispositif de commutation électrique programmable (2) et comprenant, dans un boîtier propre (22), une unité de calcul et une interface de données (24),
le dispositif de commutation (2) comprenant, dans un boîtier propre (14) :
une unité de calcul, un écran (4), une unité de commande (6), des entrées de signaux (8), des sorties de signaux (10), une interface de données (12),
des fonctions de commutation pouvant être programmées par l'utilisateur par le biais d'une interface utilisateur commandée par un menu sur l'écran (4),
le dispositif de commutation programmable (2) commandant le flux de courant entre les entrées de signaux (8) et les sorties de signaux (10) sous le contrôle d'un programme d'utilisateur et en fonction de l'état des entrées de signaux (8),
**caractérisé**,
après la connexion du dispositif de commutation (2) au module d'extension (20) dans le but d'un échange de données par le biais de leurs interfaces de données (12, 24),
par l'étape de procédé suivante :
initiation d'un mode de reconnaissance à l'intérieur du dispositif de commutation (2), une interrogation pour savoir si le module d'extension (20) raccordé peut être initialisé ou non étant posée,
• si le module d'extension (20) ne peut pas être initialisé, aucun échange de données n'a lieu entre le dispositif de commutation (2) et le module d'extension (20),
• si le module d'extension (20) peut être initialisé, le dispositif de commutation (2) passe dans un mode de communication d'extension dans lequel l'échange de données supplémentaire est réalisé sous le contrôle du système d'exploitation du module d'extension (20).

2. Procédé selon la revendication précédente, **caractérisé par le fait qu'**une interrogation pour savoir si le module d'extension initialisable (20) peut être configuré ou non est posée dans une autre étape de procédé et, dans le cas où il peut être configuré, l'unité de calcul du dispositif de commutation (2) est commandée par l'unité de calcul du module d'extension (20), dans le mode de communication d'extension, de manière à ce que l'unité de commande (6) et l'écran (4) du dispositif de commutation (2) puissent faire l'objet d'un découplage fonctionnel par rapport à celui-ci et être couplés au module d'extension (20).
